# EUROPEAN PATENT SPECIFICATION

(11) **EP 2 131 082 B1**
(45) Date of publication and mention of the grant of the patent: **04.06.2014**
(21) Application number: 09156508.5
(22) Date of filing: 27.03.2009
(51) Int. Cl.: F16L 1/20, F16L 1/24

(54) **Device**
Vorrichtung
Dispositif

(30) Priority: 02.05.2008 GB 0808005
(43) Date of publication of application: 09.12.2009
(73) Proprietor: Balmoral Comtec Limited, Loirston Aberdeen AB12 3GY (GB)
(72) Inventor: Oram, Robert, Aberdeen, Aberdeenshire AB15 9PA (GB)
(74) Representative: Crosby, Wendy Agnes

(56) References cited:
- EP-A2- 1 850 044
- WO-A1-03/025331
- GB-A- 2 379 681
- US-A1- 2004 005 829

## Description

This invention relates to a clamp device for securing buoyancy elements to underwater flowlines, risers and umbilicals.

In order to extract hydrocarbons from subsea wells, flowlines, often referred to as risers, extend from a wellhead to a surface facility, such as a production platform or production vessel. Risers are flexible and bend in response to prevailing underwater conditions. To manufacture flexible risers it is necessary to have an inner liner tube, tensile layers and an outer plastic sheath for protection from the sea. This sheathing has a low coefficient of friction with the inner tube of the riser and so is relatively delicate. Low coefficients of friction also exist between individual structural layers within the flexible riser.

In order to isolate subsea terminations from the effects of vessel movement under weather and tide effects, buoyancy modules are used to create particular configurations of risers, for example configurations known as 'Lazy S', Lazy Wave', 'Lazy W', between a Floating Production Storage and Offtake (FPSO) vessel and the seabed or floating subsea structure.

Moreover, the weight of the risers and hydrocarbons therein could be supported by the surface facility but would require strong risers and connections to maintain the integrity of a long string of risers. It is thus more economic to attach buoyancy elements to the risers to provide additional support.

Clamps can be used to fit around the riser and provide a mounting for a buoyancy element. However the attachment of the clamp must be done carefully since the sheath on the riser is liable to tear away from the underlying tensile layers of the riser if attachments thereto are over-tensioned. It is possible to make a rigid bodied clamp that is a perfect fit on a riser (the very earliest clamps were individually bored from aluminium castings to match particular locations on a riser) but it is expensive and not very practical as actual diameter of a flexible riser in practice can easily exceed +/- 3% of a given diameter.

In any case, the changes in internal and external pressure and temperature of the riser can result in a variance in the diameter of the riser and affect its connection to a clamp. Moreover the bending and tensile strains which occur in risers in use further hinder the correct dimensioning of rigid clamps. As a result manufacturing clamps with an exact fit for the flowlines was difficult and expensive and such clamps were in any case subject to failure due to the *in situ* variance in riser diameter.

A number of further clamps have been developed to mitigate these problems. One known clamp disclosed in GB2,391,255 comprises a series of clamp segments shaped to fit around a riser, and a band with bars at either end. The band is wrapped around the clamp body, which is in turn arranged around the riser. The bars are bolted together in order to tension the band around the clamp segments and attach the clamp under tension to the riser. The buoyancy element can then be attached to the clamp.

Although somewhat satisfactory, performance limitations are constantly being challenged with demands for clamps to cope with larger buoyancy loads and deployment in rougher sea states, and to accommodate larger riser strains and tighter riser bend radii and high rates of change of these radii.

However, increasing the load capacity is limited by the low coefficient of friction between the outer sheath of the riser and the underlying tensile layers and between the tensile layers themselves.

A clamp which was developed to address these problems is disclose in EP 1850044A. In this case a layer of resilient material, preferably rubber is provided on an inner face of the clamp between the clamp body and a riser.

In order to achieve the required clamp sliding resistance at an acceptable clamping load, the resilient layer is routinely significantly wider than the tension band producing the clamping load. As a result of this geometry and the compressible nature of the resilient layer, the tension band generates a high flexural stress in the clamp segments lying between the tension band and the resilient layer. Due to the clamp segment geometry in the area where the tension band leaves the nose of clamp segment, the flexural stress is typically at its highest approximately 10-30mm back from the leading edges of the front clamp blocks.

The line of peak flexural stress runs circumferentially round the clamp, approximately along the midline of the clamp segments, with the peak stress locations being in the leading blocks, 10-30mm back from their leading edges. This high flexural stress leaves the clamp segments susceptible to fracture in this area.

WO 03/025331 discloses a clamp device with the features of the preamble of claim 1.

The present invention aims to provide a clamp which addresses this problem.

According to one aspect of the present invention there is provided a clamp device suitable for attachment to a riser, the clamp comprising:
a clamp body,
a layer of resilient material provided on an inner face of the body,
a tensioning band to secure the clamp around a riser; and
a tensile reinforcement layer located between the clamp body and
the layer of resilient material,
wherein the tensile reinforcement layer has a higher tensile modulus and a higher tensile strength than the clamp body.

Due to it's significantly higher modulus vs. the clamp block material, the tensile reinforcement layer acts to stiffen the clamp segments and reduce the flexural stress in the clamp segments.

Preferably the clamp device further comprises two or more tensile reinforcement layers.

Preferably, the tensile reinforcement layer is selected from fibre-reinforced composite material or corrosion resistant metal sheet.

Conveniently, each tensile reinforcement layer comprises two or more layers of fibre matting, laminated together and/or onto the clamp body.

Optionally the laminated mat material is polymer-impregnated.

Advantageously, the tensile reinforcement layer includes woven or non-woven mat material. Optionally, the mat material is a triaxial, biaxial or axial matting. Optionally, the mat may be woven or stitched.

Preferably, the fibre weight in the mat material is biased in one direction.

Preferably, the mat is made from fibres of any of glass, carbon, aramid, Dyneema® or a combination thereof.

Optionally, the high tensile strength and high tensile modulus material is laminated onto the clamp.

Optionally, the bias of fibre weight in the lamination is in axial alignment relative to the riser.

Preferably, the layer of resilient material is provided on an inner concave face of the clamp body, bonded directly to the tensile reinforcement layer.

Preferably, the clamp body comprises a plurality of segments.

Preferably, the tensioning band has an axis bar at each end, and fastening means to draw the axis bars together.

Optionally, the resilient material is a rubber material.

Preferably, the resilient material is a natural rubber.

Conveniently, the resilient material has a thickness of at least 20mm.

More preferably the resilient material has a thickness of at least 25mm.

In one embodiment, the resilient material has a thickness which corresponds to 6-30% of the outer diameter of the riser.

Conveniently, the resilient material has a thickness which corresponds to 20-30% of outer diameter of the riser.

Conveniently, the resilient material may have a thickness which corresponds to 6-18% of the outer diameter of the riser
Preferably, the fastening means are two bolts provided on the bar adjacent to the band.

Optionally, the clamp body has a convex outer face.

Preferably, the band is supported between the bar and the body, thus preferably there is no gap there between. This allows the force from the band to be distributed more evenly.

Thus preferably the clamp body is in intimate contact with the band over the full width of the band. This is possible because the low shear modulus of the resilient rubber layer adjacent to the riser allows the clamp body to move radially when the band is being tensioned and thus remain in intimate contact with the band.

Preferably, a buoyancy element is secured to the riser via the clamp.

Thus the invention provides an apparatus comprising a clamp as described herein and a buoyancy module.

The invention also provides a riser apparatus comprising a clamp as described herein and a buoyancy module and a riser.

Embodiments of the present invention will now be described, by way of example only, with reference to the accompanying drawings, in which:
Fig. 1 is an end view from above of a clamp comprising a tensile reinforcement layer of the invention;
Fig. 2 is a perspective view of the clamp of Fig. 1;
Fig. 3 is a perspective view of a plurality of buoyancy devices mounted on clamps in accordance with the present invention;
Fig. 4a is a diagram showing the change in dimension of known clamps caused by bending of risers; and
Fig. 4b is a diagram showing how the clamps in accordance with the present invention do not change in dimension when risers bend.

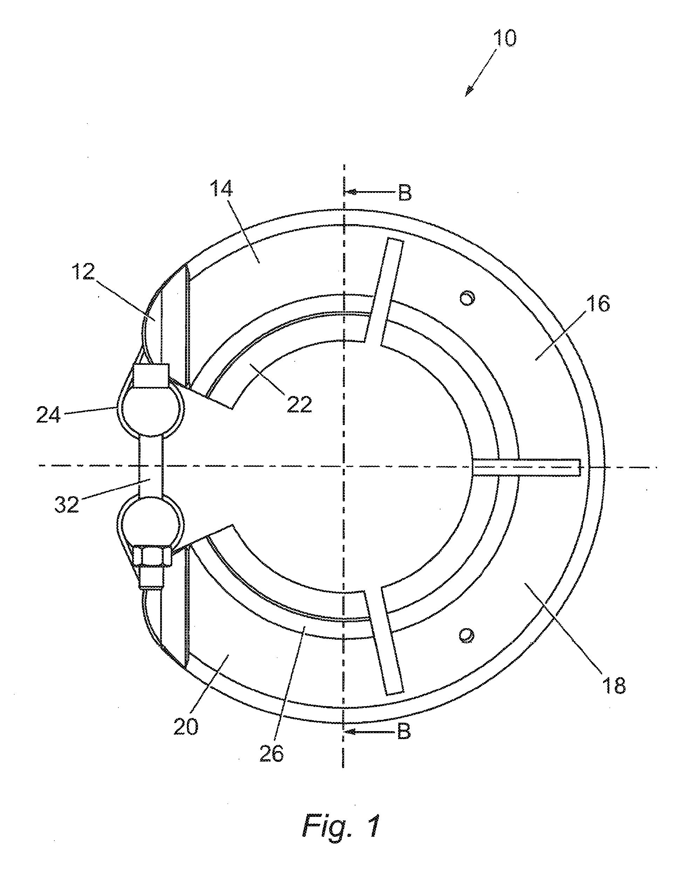

In a first embodiment the tensile reinforcement layer of the invention is used with a clamp as shown in Figure 1, although it is envisaged that the tensile reinforcement layer of the invention may be used with any type of clamp. The clamp 10 comprises a plastics jacket 12 covering four clamp segments 14, 16, 18, 20, although clamps with other numbers of segments may also be used with the tensile reinforcement layer of the invention.

In the embodiment shown the jacket extends over substantially the top and side faces of the segments. However, the amount of coverage may vary depending on the operational requirements of the clamp and in some embodiments the jacket may only cover the outer convex face of the segments. Each segment comprises a concave inner face. A layer of rubber 22 is placed between the concave inner segment face and the article to which the clamp is attached when the clamp is in place. The outer convex face of the clamp is covered by tension band 24. As shown in Fig. 1, a tensile reinforcement layer 26 is provided between the inner concave surface of the clamp segment and the rubber layer 22. As would be understood by the person skilled in the art, the rubber layer can be made of any resilient material and is preferably, but not limited to, rubber, e.g. natural rubber.

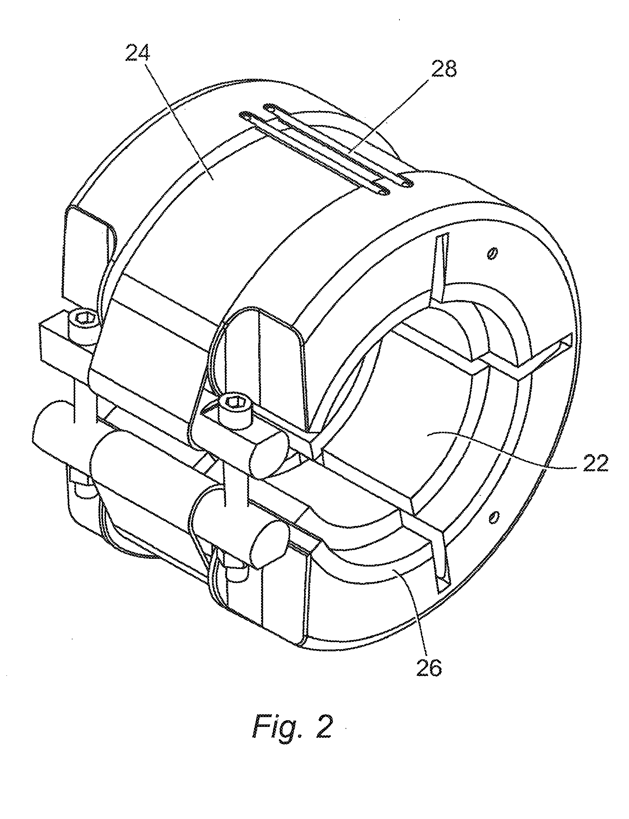

Figure 2 illustrates a perspective view of the clamp of Fig. 1 where the rubber layer 22 is shown as a narrower layer than the tensile reinforcement layer 26. It is understood that the tensile reinforcement layer and the rubber layer may be the same or different widths in the axial direction relative to one another. Figure 2 also illustrates band retainers 28 to hold the band on the surface of the clamp.

Figures 1 and 2 illustrate a continuous tensile reinforcement layer 26 across the entire inside surface of the front blocks of the clamp device, although it is understood that the tensile reinforcement layer may be discontinuous, partial or complete in coverage. The high tensile material may be present over the entire inside face of each block/segment, over the front clamp segments only, or only at points of high stress and/or peak stress on individual blocks. Intermediate amounts of the high tensile material may also be used. More than one tensile reinforcement layer can be used. Preferably two or more layers of tensile reinforcement matting are present in each layer.

The tensile reinforcement layer is made of any high tensile strength, high tensile modulus material, for example but not limited to, fibre-reinforced epoxy composites or corrosion resistant metal sheet. Epoxy composites are preferred to maximise inter-material bond strength. Triaxial unwoven/stitched matt with typical values of 0 degrees/45 degrees/45 degrees and 600/300/300gm/m² weight is also suitable. Triaxial, biaxial or uniaxial, woven or non-woven mats can also be used in the tensile reinforcement layer, preferably with the fibre reinforcement of the composite being at least equal, and preferably significantly greater, bias in weight and/or strength in the axial direction of the riser after installation. Preferably, two layers of triaxial unwoven/stitched mat, 0 degrees/45 degrees/45 degrees, 600/300/300gm/m² are used, with the major reinforcement in the 0 degree direction in both mattings being aligned in the axial direction.

Suitable matting materials are glass, carbon, aramid, Dyneema^{®} or any other high strength, high modulus fibre or any combination of these. Where glass matting is used as the reinforcement layer, the total matting reinforcement weight should exceed 450gm/m² and may be as high as 7200mg/m². Other fibre matting weights should be used in quantities which are proportional to their tensile properties.

Preferably, the tensile reinforcement layer is laminated, the lamination being directional in its reinforcement properties. Preferably the bias of the lamination is towards axial alignment, i.e. in the direction of the riser and parallel to the clamp leading edge. Optionally, the tensile reinforcement layer may be pre-manufactured and be bonded onto the clamp body, rather than being created in situ by lamination.

The laminated material may include a resin, e.g. a polymer resin or epoxy resin. The laminated material may include polymer impregnated mat material, e.g. polymer-impregnated woven mat material. Other laminating or impregnating resins may be used with the tensile reinforcement layer of the invention, for example but not limited to, unsaturated polyester, vinyl ester or phenolic thermoset and/or thermoplastic resins. The type of resin to be used will vary depending on the nature of the clamp body onto which lamination occurs and the availability of suitable adhesives for bonding of pre-made laminates.

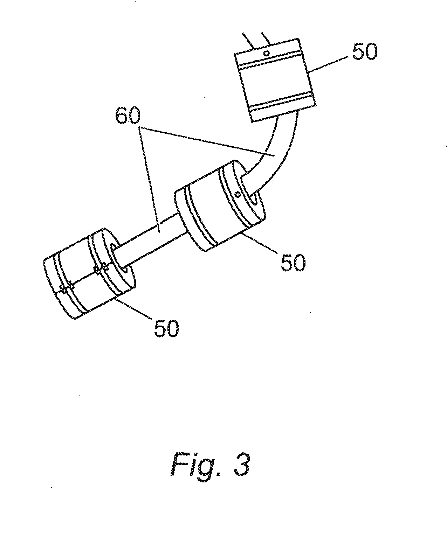

All the segments of the various clamp embodiments outlined above can be wrapped around a subsea riser 60. The bars, 28 are attached to the band 24 and are tightened together by bolts 32 thus tensioning the clamp around the riser 60, as described in more detail below. A buoyancy device 50 is then connected to the clamp by known means. The riser 60 is then fed through a moon-pool (not shown) or similar, with buoyancy devices being installed and launched sequentially. Fig. 3 shows three buoyancy devices 50 on a riser 60. The buoyancy devices 50 thus allow the riser string to flex in response to tide and wave conditions so that the connections between the surface facility (which may move in response to such conditions) and subsea wellhead or structure (which is substantially stationary) are not excessively stressed or broken. The clamp and the buoyancy devices 50, may be installed on either a horizontal or a vertical riser.

As will be noted from Fig. 3, the risers may be rigid and may be adapted to bend to cope with sea conditions. Thus the clamp 10 has to cope with such bending without losing its grip on the riser 60. Moreover the acceptable manufacturing tolerances on risers can cause their outer diameter to vary away from the declared size.

The rubber inner face 22 helps to cope with such difficulties, as seen in Figure 2. In this preferred embodiment the rubber inner face 22 is provided in direct contact with the riser 60.

The resilient rubber layer next to the riser ensures that the radial distribution of the clamping pressure is improved, mitigating the capstan effect that is common to known clamp designs. In other words, the low shear modulus of the rubber allows the relative movement of the band and segments as if the band were in contact with a frictionless interface thus relieving tensioning variances within the band. Moreover this is achieved without reducing the friction necessary to prevent slippage.

Suitable materials for the rubber are those which not only have low stress relaxation rates, high resistance to seawater and high heat resistance but those that result in liquid like behaviour under load, that is virtually no volume change under load (a Poison's ratio near to 0.5). Most grades of natural rubber have a value in excess of 0.49995. They also have very high resilience - when the load on it is reduced the rubber recovers rapidly. If this did not occur, slip could be possible when the riser contracts. Preferably the rubber is natural rubber such as Engineering Vulcanzate^{™}.

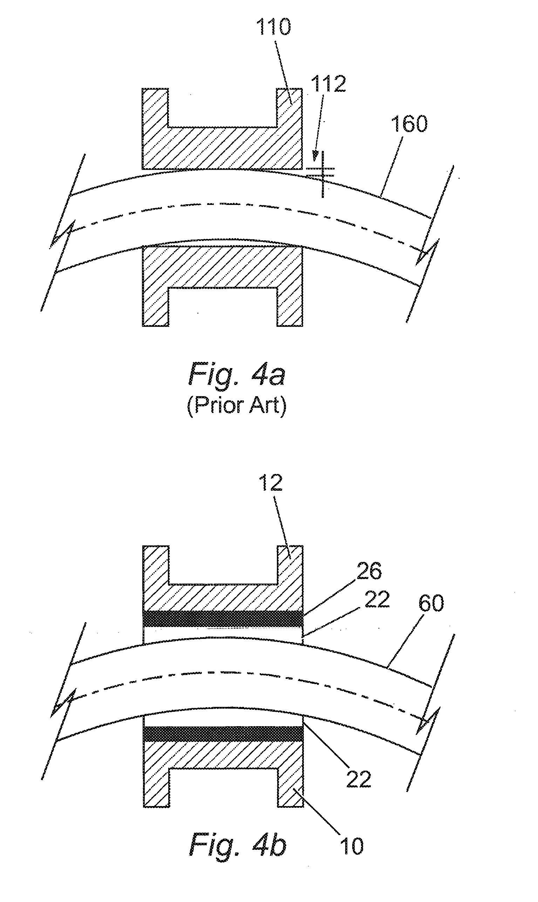

Fig. 4a shows a prior art clamp 110 and the consequential increase 112 in diameter following bending of a riser 160. The resultant large, cyclic increases in band tension will cause fatigue in the tensioning band. This does not occur with preferred embodiments of the present invention because the rubber layer 22 next to the riser 160 negates this effect, as shown in Fig. 4b. Thus embodiments of the present invention accommodate flexure of a riser from straight to minimum bend radius with no significant increase in the hoop load. As a consequence, fatigue of the tensioning band is not an issue.

The rubber layer also serves to accommodate large variations in diameter of the riser. Without such a rubber layer, even small dimensional variations due to manufacturing tolerances of the riser, it would not be possible to evenly tension a band around a stiff clamp body. Thus embodiments of the present invention benefit in that bending/flexure of the riser does not result in large load increases in the clamp or high local pressure increases on the riser.

The segments of the clamp 10 are manufactured from a fibre reinforced composites material which makes use of directional stiffness properties or moulded from syntactic foams. Where directionally-reinforced material is used, the segments are very much stiffer in the axial direction than they are in the hoop wise direction. This allows for good load dispersal from the band 24 in the axial direction, for which stiffness is desirable, and compliance to the riser 60 geometry in the hoop wise direction thus enhancing the conformity of the clamp with the riser 60 whilst also providing support for a high loading of buoyancy elements.

The various features described herein of the preferred embodiment of the invention allow the clamp to resist tensile fractures and associated breaks. This is especially important where syntactic or similar foams are used in the clamp. Syntactic foams have low tensile strength especially if stress-concentrating micro-defects are present.

Such an advantage is provided in addition to the further embodiments described herein which provide a clamp resistant to tensile fractures and which can be tensioned very accurately with a more even load distribution across the width of the band, by hydraulic means which precludes galling and thread stripping, and allows for a fast yet accurate installation.
The design of the clamp segments with high axial stiffness and low hoop stiffness also enhances the even pressure distribution. The even pressure distribution is especially important since localised differences could cause the clamp to damage the internal reinforcement structure of the riser.

Thus embodiments of the present invention benefit in that the clamp is better able to accommodate variations in the riser diameter, both ovality and differences in the circumference measurement than is the case where a rigid clamp body is in direct contact with the riser or even where a rigid clamp body with a thin covering or coating.

The tensile reinforcement layer allows maximum advantage to be taken of the resilient layer without introducing risk of excessive clamp block flexure and potential fracture.

Improvements and modifications may be made without departing from the scope of the invention.

In a further embodiment the tensioning band may be a band having looped ends to provide a pocket for locating a connector. Each connector may have one or more aligned apertures to receive a fastening means such as a threaded bolt which passes through the apertures to span the connectors. The fastening means may be held in position either by corresponding threads on the connectors or a nut threaded onto the bolt. The band may be formed of a material such as Kevlar ®.

In another embodiment, the layer of resilient material on each clamp body segment may be divided into sections, e.g. 2, 3 or 4 sections, in order to modify the compressibility of the layer of resilient material. By sectioning the layer of resilient material in this way the stiffness of the resilient layer is reduced. In a further embodiment, holes may be provided at numerous positions within the layer of resilient material to achieve the same result. Moreover, a segmented layer of resilient material may additionally comprise a plurality of holes.

As would be appreciated by the skilled person, the device of the present invention may be used to clamp any tubular member, such as but not limited to underwater flowlines, umbilicals and the like, without modification. Thus, the devices detailed above may be used to clamp flowlines, umbilicals and the like and the term riser should be taken to be interchangeable with other tubular members such as but not limited to flowlines and umbilicals.

As would be appreciated by the person skilled in the art, the thickness of the resilient layer varies depending on the outer diameter of the riser, flowline or umbilical to which it will be attached. In some embodiments, the resilient material has a thickness which corresponds to 6-30%, and any value in-between, of the outer diameter of the riser, flowline or umbilical.

In one embodiment the resilient material may have a thickness which corresponds to 5-15% of the outer diameter of the riser. Alternatively, the resilient material may have a thickness which corresponds to 8-12% of the outer diameter of the riser.

Umbilicals typically require a thicker resilient layer to compensate for the compression experienced by the umbilical. A clamp of the present invention for use with an umbilical typically includes a resilient layer with a thickness which corresponds to 22% to 30% of the outer diameter of the umbilical, preferably 24%.

Additionally, using clamps operating on umbilicals and/or on insulated risers, the clamp is required to accommodate more elastic expansion plus more elastic and inelastic compression. Accordingly, the resilient layer may have a thickness which corresponds approximately to 24% of umbilical/riser outer diameter, with a practical range of 20 - 30%.

In another embodiment, using clamps operating on un-insulated flexible flowlines and risers, elastic expansion plus elastic & inelastic compression are smaller. Accordingly, the resilient layer may have a thickness which corresponds to 12% of flexible pipe outer diameter, with a practical range of 6-18%.

## Claims

1. A clamp device (10) suitable for attachment to a riser, the clamp comprising :
a clamp body (14;16;18;20),
a layer of resilient material (22) provided on an inner face of the body,
a tensioning band (24) to secure the clamp around a riser; and
a tensile reinforcement layer (26) located between the clamp body
and layer of resilient material,
**characterized in that** the tensile reinforcement layer has a higher tensile modulus and higher tensile strength than the clamp body.

2. A clamp device as claimed in claim 1, further comprising two or more tensile reinforcement layers.

3. A clamp device as claimed in claim 1 or 2 wherein the tensile reinforcement layer is selected from fibre-reinforced composite or corrosion resistant metal sheet.

4. A clamp device as claimed in any preceding claim wherein the tensile reinforcement layer includes woven or non-woven mat material.

5. A clamp device as claimed in claim 4 wherein the mat material is polymer-impregnated.

6. A clamp device as claimed in claim 4 or 5 wherein the mat material is triaxial, biaxial or axial.

7. A clamp device as claimed in any of claims 4 to 6 wherein the mat is stitched..

8. A clamp device as claimed in any of claims 4 to 6 wherein the mat is woven.

9. A clamp device as claimed in any of claims 4 to 7 wherein the mat material is biased in weight and/or strength in the axial direction.

10. A clamp device as claimed in any of one of claims 4 to 9 wherein the mat material comprises any of glass, carbon, aramid, Dyneema® or a combination thereof.

11. A clamp device as claimed in any preceding claim wherein the high tensile modulus and high tensile strength material is laminated onto the clamp.

12. A clamp device as claimed in claim 11 wherein the lamination is biased in weight and/or strength towards axial alignment relative to the riser.

13. A clamp device according to claim any preceding claim, wherein the layer of resilient material is provided on an inner concave face of the body.

14. A clamp device according to any preceding claim, wherein the clamp body comprises a plurality of segments.

15. A clamp device according to any preceding claim, wherein the tensioning band has an axis bar (28) at each end, and fastening means (32) to draw the axis bars together.

16. A clamp device according to any one of the preceding claims, wherein the resilient material is a rubber material.

17. A clamp device according to any preceding claim, wherein the resilient material has a thickness of at least 20mm.

18. A clamp device according to claim 17, wherein the resilient material has a thickness of at least 25mm.

19. A clamp device according to any preceding claim, wherein the resilient material has a thickness which corresponds to 6-30% of the outer diameter of the riser.

20. A clamp device according to claim 19, wherein the resilient material has a thickness which corresponds to 20-30% of the riser outer diameter.

21. A clamp device according to claim 19, wherein the resilient material has a thickness which corresponds to 6-18% of the riser outer diameter.

22. A clamp device according to any preceding claim, wherein the clamp is made from a material which has a higher axial strength than radial or hoop strength.

23. A clamp device according to claim 15, wherein the fastening means are two bolts provided on the bar adjacent to the band.

24. A clamp device according to any one of the preceding claims, wherein the clamp body has a convex outer face.

25. An apparatus comprising a clamp device according to any one of the preceding claims and a buoyancy module.

26. A riser apparatus comprising a clamp device according to any one of the preceding claims and a buoyancy module and a riser.

## Patentansprüche

1. Eine Klemmvorrichtung (10), die zur Anbringung an einem Riser geeignet ist, wobei die Klemme Folgendes beinhaltet:
einen Klemmkörper (14; 16; 18; 20),
eine Schicht aus elastischem Material (22), die auf einer Innenseite des Körpers bereitgestellt ist,
ein Spannband (24), um die Klemme um einen Riser zu sichern; und
eine Zugbewehrungsschicht (26), die sich zwischen dem Klemmkörper und der Schicht aus elastischem Material befindet,
**dadurch gekennzeichnet, dass** die Zugbewehrungsschicht einen höheren Zugmodul und eine höhere Zugfestigkeit als der Klemmkörper aufweist.

2. Klemmvorrichtung gemäß Anspruch 1, die ferner zwei oder mehr Zugbewehrungsschichten beinhaltet.

3. Klemmvorrichtung gemäß Anspruch 1 oder 2, wobei die Zugbewehrungsschicht aus faserverstärktem Verbundwerkstoff oder korrosionsbeständigem Metallblech ausgewählt ist.

4. Klemmvorrichtung gemäß einem der vorhergehenden Ansprüche, wobei die Zugbewehrungsschicht gewebtes oder nichtgewebtes Mattenmaterial umfasst.

5. Klemmvorrichtung gemäß Anspruch 4, wobei das Mattenmaterial polymerimprägniert ist.

6. Klemmvorrichtung gemäß Anspruch 4 oder 5, wobei das Mattenmaterial triaxial, biaxial oder axial ist.

7. Klemmvorrichtung gemäß einem der Ansprüche 4 bis 6, wobei die Matte genäht ist.

8. Klemmvorrichtung gemäß einem der Ansprüche 4 bis 6, wobei die Matte gewebt ist.

9. Klemmvorrichtung gemäß einem der Ansprüche 4 bis 7, wobei das Mattenmaterial hinsichtlich Gewicht und/oder Festigkeit in der axialen Richtung spezifisch ausgerichtet ist.

10. Klemmvorrichtung gemäß einem der Ansprüche 4 bis 9, wobei das Mattenmaterial beliebiges aus Glas, Kohlenstoff, Aramid, Dyneema® oder eine Kombination davon beinhaltet.

11. Klemmvorrichtung gemäß einem der vorhergehenden Ansprüche, wobei das Material mit hohem Zugmodul und hoher Zugfestigkeit auf die Klemme laminiert ist.

12. Klemmvorrichtung gemäß Anspruch 11, wobei das Laminat hinsichtlich Gewicht und/oder Festigkeit zur axialen Ausrichtung relativ zu dem Riser hin spezifisch ausgerichtet ist.

13. Klemmvorrichtung gemäß einem der vorhergehenden Ansprüche, wobei die Schicht aus elastischem Material auf einer konkaven Innenseite des Körpers bereitgestellt ist.

14. Klemmvorrichtung gemäß einem der vorhergehenden Ansprüche, wobei der Klemmkörper eine Vielzahl von Segmenten beinhaltet.

15. Klemmvorrichtung gemäß einem der vorhergehenden Ansprüche, wobei das Spannband an jedem Ende eine Achsenstange (28) und Befestigungsmittel (32) zum Zusammenziehen der Achsenstangen aufweist.

16. Klemmvorrichtung gemäß einem der vorhergehenden Ansprüche, wobei das elastische Material ein Gummimaterial ist.

17. Klemmvorrichtung gemäß einem der vorhergehenden Ansprüche, wobei das elastische Material eine Dicke von mindestens 20 mm aufweist.

18. Klemmvorrichtung gemäß Anspruch 17, wobei das elastische Material eine Dicke von mindestens 25 mm aufweist.

19. Klemmvorrichtung gemäß einem der vorhergehenden Ansprüche, wobei das elastische Material eine Dicke aufweist, die 6-30 % des äußeren Durchmessers des Risers entspricht.

20. Klemmvorrichtung gemäß Anspruch 19, wobei das elastische Material eine Dicke aufweist, die 20-30 % des äußeren Durchmessers des Risers entspricht.

21. Klemmvorrichtung gemäß Anspruch 19, wobei das elastische Material eine Dicke aufweist, die 6-18 % des äußeren Durchmessers des Risers entspricht.

22. Klemmvorrichtung gemäß einem der vorhergehenden Ansprüche, wobei die Klemme aus einem Material hergestellt ist, das eine höhere axiale Festigkeit als radiale Festigkeit oder Umfangsfestigkeit aufweist.

23. Klemmvorrichtung gemäß Anspruch 15, wobei die Befestigungsmittel zwei Bolzen sind, die auf der Stange neben dem Band bereitgestellt sind.

24. Klemmvorrichtung gemäß einem der vorhergehenden Ansprüche, wobei der Klemmkörper eine konvexe Außenseite aufweist.

25. Eine Einrichtung, die eine Klemmvorrichtung gemäß einem der vorhergehenden Ansprüche und einen Auftriebskörper beinhaltet.

26. Eine Risereinrichtung, die eine Klemmvorrichtung gemäß einem der vorhergehenden Ansprüche und einen Auftriebskörper und einen Riser beinhaltet.

## Revendications

1. Un dispositif d'élément de serrage (10) convenant pour être attaché à une colonne montante, l'élément de serrage comprenant :
un corps d'élément de serrage (14 ; 16 ; 18 ; 20),
une couche de matériau élastique (22) fournie sur une face interne du corps,
une bande de mise sous tension (24) pour fixer l'élément de serrage autour d'une colonne montante ; et
une couche de renforcement à la traction (26) située entre le corps d'élément de serrage et la couche de matériau élastique,
**caractérisé en ce que** la couche de renforcement à la traction a un module en traction plus élevé et une résistance à la traction plus élevée que le corps d'élément de serrage.

2. Un dispositif d'élément de serrage tel que revendiqué dans la revendication 1, comprenant en outre deux couches de renforcement à la traction ou plus.

3. Un dispositif d'élément de serrage tel que revendiqué dans la revendication 1 ou la revendication 2 dans lequel la couche de renforcement à la traction est sélectionnée parmi un composite renforcé par fibres ou une feuille de métal résistant à la corrosion.

4. Un dispositif d'élément de serrage tel que revendiqué dans n'importe quelle revendication précédente dans lequel la couche de renforcement à la traction inclut un matériau de mat tissé ou non tissé.

5. Un dispositif d'élément de serrage tel que revendiqué dans la revendication 4 dans lequel le matériau de mat est imprégné de polymère.

6. Un dispositif d'élément de serrage tel que revendiqué dans la revendication 4 ou la revendication 5 dans lequel le matériau de mat est triaxial, biaxial ou axial.

7. Un dispositif d'élément de serrage tel que revendiqué dans n'importe lesquelles des revendications 4 à 6 dans lequel le mat est piqué.

8. Un dispositif d'élément de serrage tel que revendiqué dans n'importe lesquelles des revendications 4 à 6 dans lequel le mat est tissé.

9. Un dispositif d'élément de serrage tel que revendiqué dans n'importe lesquelles des revendications 4 à 7 dans lequel le matériau de mat est biaisé en poids et/ou en résistance dans la direction axiale.

10. Un dispositif d'élément de serrage tel que revendiqué dans n'importe lesquelles des revendications 4 à 9 dans lequel le matériau de mat comprend un matériau quelconque parmi du verre, du carbone, de l'aramide, du Dyneema® ou une combinaison de ceux-ci.

11. Un dispositif d'élément de serrage tel que revendiqué dans n'importe quelle revendication précédente dans lequel le matériau de module de traction élevé et de résistance à la traction élevée est stratifié sur l'élément de serrage.

12. Un dispositif d'élément de serrage tel que revendiqué dans la revendication 11 dans lequel la strate est biaisée en poids et/ou en résistance vers un alignement axial par rapport à la colonne montante.

13. Un dispositif d'élément de serrage selon n'importe quelle revendication précédente, dans lequel la couche de matériau élastique est fournie sur une face concave interne du corps.

14. Un dispositif d'élément de serrage selon n'importe quelle revendication précédente, dans lequel le corps d'élément de serrage comprend une pluralité de segments.

15. Un dispositif d'élément de serrage selon n'importe quelle revendication précédente, dans lequel la bande de mise sous tension a une barre d'axe (28) au niveau de chaque extrémité et un moyen de fixation (32) pour attirer les barres d'axe ensemble.

16. Un dispositif d'élément de serrage selon l'une quelconque des revendications précédentes, dans lequel le matériau élastique est un matériau en caoutchouc.

17. Un dispositif d'élément de serrage selon n'importe quelle revendication précédente, dans lequel le matériau élastique a une épaisseur d'au moins 20 mm.

18. Un dispositif d'élément de serrage selon la revendication 17, dans lequel le matériau élastique a une épaisseur d'au moins 25 mm.

19. Un dispositif d'élément de serrage selon n'importe quelle revendication précédente, dans lequel le matériau élastique a une épaisseur qui correspond à entre 6 et 30 % du diamètre externe de la colonne montante.

20. Un dispositif d'élément de serrage selon la revendication 19, dans lequel le matériau élastique a une épaisseur qui correspond à entre 20 et 30 % du diamètre externe de colonne montante.

21. Un dispositif d'élément de serrage selon la revendication 19, dans lequel le matériau élastique a une épaisseur qui correspond à entre 6 et 18 % du diamètre externe de colonne montante.

22. Un dispositif d'élément de serrage selon n'importe quelle revendication précédente, dans lequel l'élément de serrage est réalisé à partir d'un matériau qui a une résistance axiale plus élevée qu'une résistance radiale ou périphérique.

23. Un dispositif d'élément de serrage selon la revendication 15, dans lequel le moyen de fixation consiste en deux boulons fournis sur la barre adjacente à la bande.

24. Un dispositif d'élément de serrage selon l'une quelconque des revendications précédentes, dans lequel le corps d'élément de serrage a une face externe convexe.

25. Un appareil comprenant un dispositif d'élément de serrage selon l'une quelconque des revendications précédentes et un module de flottabilité.

26. Un appareil de colonne montante comprenant un dispositif d'élément de serrage selon l'une quelconque des revendications précédentes et un module de flottabilité et une colonne montante.
